(19) Europäisches Patentamt / European Patent Office / Office européen des brevets

(11) **EP 1 912 367 B1**

(12) **EUROPEAN PATENT SPECIFICATION**

(45) Date of publication and mention of the grant of the patent:
**15.12.2010 Bulletin 2010/50**

(51) Int Cl.:
*H04L 1/06* (2006.01)  *H03M 13/25* (2006.01)

(21) Application number: **06301038.3**

(22) Date of filing: **11.10.2006**

(54) **Method of decoding of a received multidimensional signal and corresponding device**

Verfahren zur Dekodierung eines empfangenen multidimensionalen Signals und entsprechende Vorrichtung

Procédé de décodage d'un signal multidimensionnel reçu et dispositif correspondant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008 Bulletin 2008/16**

(73) Proprietor: **Thomson Licensing**
**92130 Issy-les-Moulineaux (FR)**

(72) Inventor: **Gueguen, Arnaud**
**92648 Boulogne Cedex (FR)**

(74) Representative: **Le Dantec, Claude**
**Technicolor**
**1-5 rue Jeanne d'Arc**
**92130 Issy-les-Moulineaux (FR)**

(56) References cited:
**EP-A1- 1 560 347    WO-A-02/060082**
**WO-A-03/055068    WO-A-2004/054191**
**FR-A- 2 863 422**

- KOHNO K ET AL: "An adaptive super-exponential deflation algorithm for blind deconvolution of MIMO systems using the QR-factorization of matrix algebra" CIRCUITS AND SYSTEMS, 2004. MWSCAS '04. THE 2004 47TH MIDWEST SYMPOSIUM ON HIROSHIMA, JAPAN JULY 25-28, 2004, PISCATAWAY, NJ, USA,IEEE, vol. 3, 25 July 2004 (2004-07-25), pages III419-III422, XP010739231 ISBN: 0-7803-8346-X
- PENG LIU ET AL: "A new efficient MIMO detection algorithm based on cholesky decomposition" ADVANCED COMMUNICATION TECHNOLOGY, 2004. THE 6TH INTERNATIONAL CONFERENCE ON PHOENIX PARK, KOREA FEB. 9-11, 2004, PISCATAWAY, NJ, USA,IEEE, vol. 1, 9 February 2004 (2004-02-09), pages 264-268, XP010702891 ISBN: 89-5519-119-7
- WÜBBEN D ET AL: "Efficient algorithm for decoding layered space-time codes" ELECTRONICS LETTERS, IEE STEVENAGE, GB, vol. 37, no. 22, 25 October 2001 (2001-10-25), pages 1348-1350, XP006017406 ISSN: 0013-5194
- MURUGANATHAN S D ET AL: "A recursive qr detector for space-frequency block coded ofdm systems with four transmit antennas" COMMUNICATIONS, COMPUTERS AND SIGNAL PROCESSING, 2005. PACRIM. 2005 IEEE PACIFIC RIM CONFERENCE ON VICTORIA, BC, CANADA 24-26 AUG., 2005, PISCATAWAY, NJ, USA,IEEE, 24 August 2005 (2005-08-24), pages 510-513, XP010841561 ISBN: 0-7803-9195-0

**Description**

**1. Field of the invention.**

The present invention relates to the field of digital communication. More specifically, it deals with an efficient way to implement a decoding based on a lattice, that is used, for example, in a decoding of a signal transmitted through a noisy channel or multi-user detection.

**2. Technological background.**

Optimal decoding of digital signals that have been distorted by linear filtering (e.g. a wireless channel) and corrupted by noise is a key and recurrent issue in digital communications. An optimal decoder is the one that finds the candidate digital signal that is the most likely, given the received observed signal. Such optimal decoder is said to be optimal in the sense of Maximum Likelihood (or ML).

A basic approach to perform ML decoding consists in exhaustively enumerating all possible transmitted digital signals and selecting the most likely candidate. The selection criterion often consists in computing a Euclidean distance between the filtered candidate and the received observation. However, such exhaustive enumeration is very time consuming and most of the time impractical for real time applications. Indeed the number of candidates, and hence the decoder complexity, is exponential with respect to the length of the digital signal. For instance a signal carrying 10 bits may take 1024 (or $2^{10}$) different values and all these values need being enumerated in basic ML decoding.

More appropriate ML decoding algorithms have emerged based on a multidimensional lattice description of the problem, which will be referred to as lattice decoders in the sequel. For instance a signal made of 8 consecutive 16QAM symbols can be described by a 8 dimension lattice with 16 discrete possible values per dimension. After linear filtering, the lattice will remain a lattice but it will be distorted. Instead of enumerating all possible lattice points ($16^8$ in the present case), lattice decoders will restrict to evaluating lattice points that are in the vicinity of the received signal.

The main drawback of the state of the art is that lattice decoders are still complex (especially for real time applications) even if they have polynomial decoding complexity (instead of exponential for basic ML).

Simplifications of lattice decoders for applications of MIMO (or Multiple Input Multiple Output) transmissions, have been suggested in the following documents:

- "VLSI implementation of MIMO detection using the sphere decoding algorithm" written by Burg & Al (and published in Solid-State Circuits, IEEE Journal of Volume 40, Issue 7, July 2005 Pages 1566-1577); and
- "On maximum-likelihood detection and the search for the closest lattice point" written by Damen & Al (and published in Information Theory, IEEE Transactions on Volume 49, Issue 10, Oct. 2003 Pages:238 -2402).

Indeed, the technique presented in these documents still remains complex.

FR 2 863 422 A published on June 10, 2005 discloses a transmission method in a MIMO communication system implementing a linear pre-coding of the signal to be transmitted.

**3. Invention summary.**

The invention is aimed at alleviating these drawbacks of the prior art.

More particularly, the objective of the invention is to simplify the implementation of a decoding method based on a lattice, while keeping good performances.

For this purpose, the invention proposes a method of decoding of a multidimensional received signal corresponding to a discrete multidimensional coded signal transmitted through a channel, so-called transmitted signal, **characterized in that** it comprises the following steps:

- computation of a first matrix with respect to an estimation of the channel and a code associated to the transmitted signal;
- sorting of the vectors of the first matrix according to a decreasing colinearity criteria, a permutation being applied to the vectors of the first matrix to obtain a reordered matrix;
- decoding of an observation with a lattice decoding by using the reordered matrix to get estimation of a permutated transmitted signal; and
- inverse permutation of the estimation of the permutated transmitted signal to get an estimation of the transmitted signal.

According to the invention, a permutated transmitted signal is a discrete multidimensional coded signal, the components of which are permuted.

Lattice decoding corresponds to a decoding of a distorted discrete multidimensional signal.

Sorting of vectors of the first matrix can be considered as sorting of columns and/or sorting of rows of the first matrix, depending whether column or row notation is used.

According to a specific feature, the method according to claim 1, characterized in that the first matrix is an equivalent channel matrix equal to a product of a channel matrix by a code matrix.

According to an advantageous feature, the matrix derived from the reordered matrix is the reordered matrix and in that it comprises a QR preprocessing step, the decoding step comprising a decomposition of the reordered matrix.

According to another advantageous feature, the first matrix is a Gram matrix that is equal to the product of the transpose of an equivalent channel matrix by the equivalent channel matrix, the equivalent channel matrix being equal to a product of a channel matrix by a code matrix, the reordered matrix being obtained by sorting of columns and rows of the first matrix according to a decreasing colinearity criterion.

According to a specific feature, the method comprises a Cholesky preprocessing step, the decoding step comprising a Cholesky decomposition of the reordered matrix.

Advantageously, the sorting of vectors of the first matrix according to a decreasing colinearity criterion comprise at least a scalar product computation between two vectors of the first matrix.

The scalar product can be made on real field or on complex field.

The scalar product can be normalized or not.

According to a particular feature, the discrete multidimensional coded signal comprises data representative of a digital video broadcast signal.

The inventions also concerns a device of decoding of a multidimensional received signal corresponding to a discrete multidimensional coded signal transmitted through a channel, so-called transmitted signal, characterized in that it comprises the following means:

- means of computation of a first matrix with respect to an estimation of the channel and a code associated to the transmitted signal;
- means of sorting of vectors of the first matrix according to a decreasing colinearity criterion, a permutation being applied to vectors of the first matrix to obtain a reordered matrix;
- means of decoding of an observation with a lattice decoding by using matrix derived from the reordered matrix to get estimation of a permutated transmitted signal; and
- means of inverse permutation of the estimation of the permutated transmitted signal to get an estimation of the transmitted signal.

This device is for example a receiver, a corresponding chip, a terminal (such as a mobile device, a telecommunication device).

## 4. Brief description of the drawings.

The invention will be better understood, and other features and advantages will become apparent from reading the description that follows, the description referring to the appended drawings in which:

- Figure 1 represents a wireless network;
- Figure 2 represents an exemplary architecture of a data transmitter capable of sending data in a way compliant with the invention;
- Figure 3 represents an exemplary architecture of a data receiver according to a specific embodiment of the invention;
- Figure 4 represents an exemplary architecture of a decoder inside the receiver of figure 3;
- Figure 5 represents a decoding method implemented in the receiver of figure 3 according to the invention;
- Figure 7 is a schematic view in a case the dimension of the decoding method of Figure 5 is two;
- Figure 8 represents the distribution of the norm of the noise vector affecting the signal received by the receiver of figure 3;

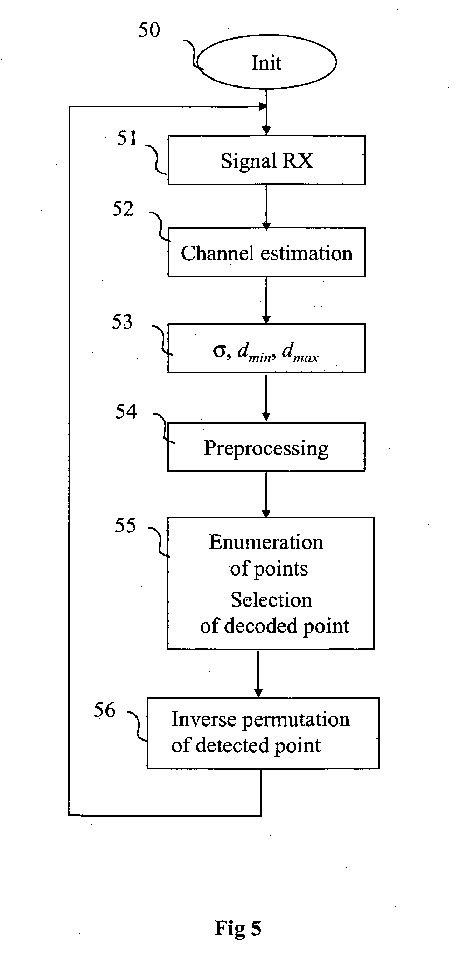

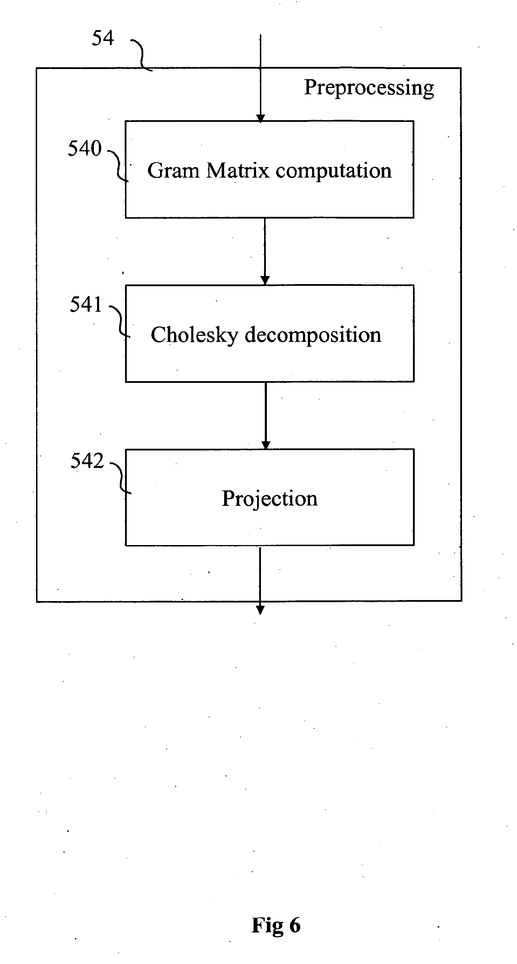

- Figures 6; 9 and 10 represent detailed step of the decoding method of Figure 5;

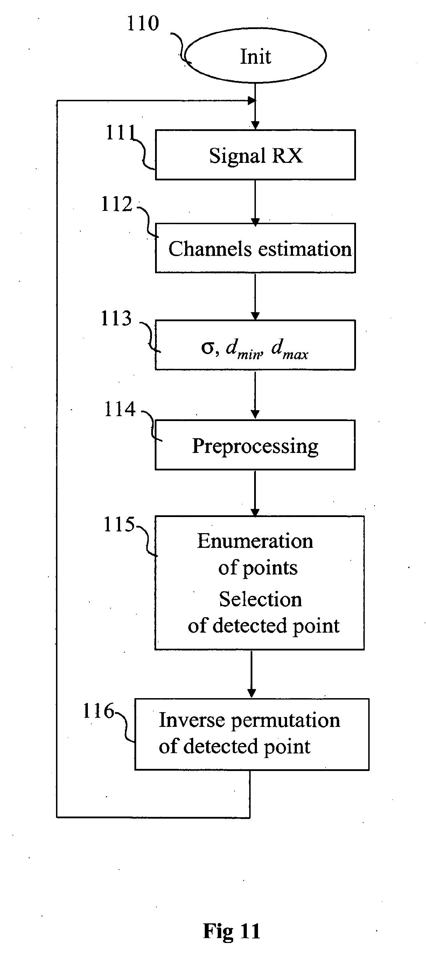

- Figure 11 represents a multi-user detection according to a specific embodiment of the invention; and

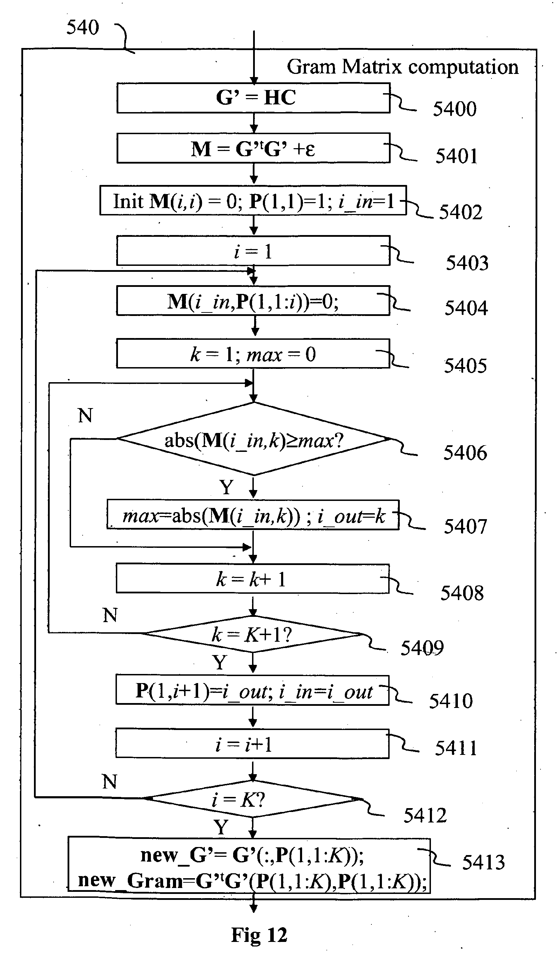

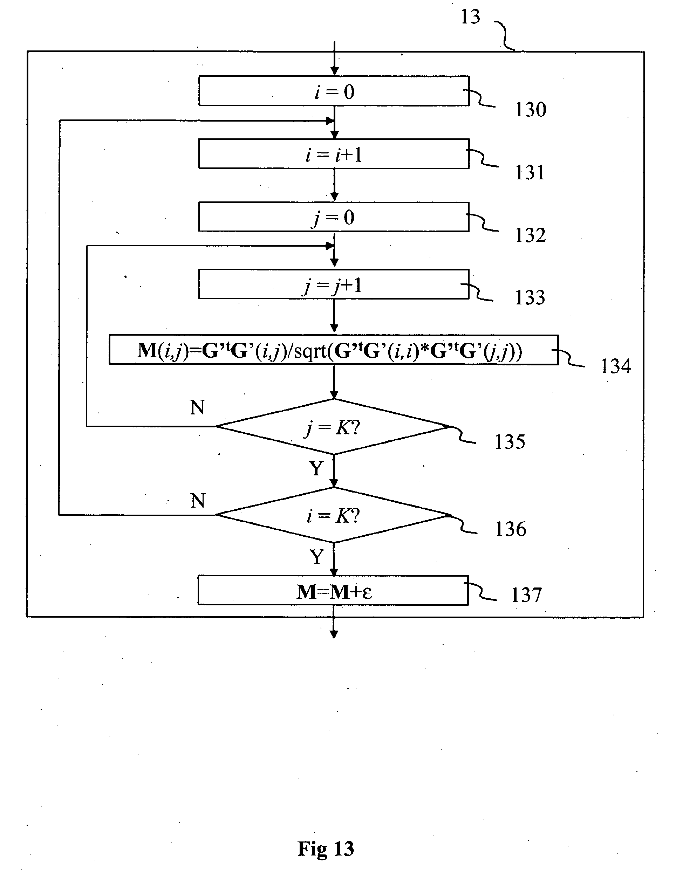

- Figures 12 and 13 present matrix reordering step in the decoding method of figure 5.

## 5. Detailed description of the invention.

The invention reduces the complexity of lattice based decoders. In particular, it has been observed through simulations that some types of wireless channels strongly distort the lattice representing the transmitted signal, which induces a larger decoding complexity of lattice decoders (e.g. when the lattice basis is ill conditioned). This is the case for strongly spatially correlated channels and/or channels presenting a strong LOS (Line Of Sight) component. The invention brings a significant complexity reduction for this type of wireless channels, which has been observed as being a critical channel type that conditions the lattice decoder complexity and dimension the receiver design.

The invention can be applied to all systems that are based on lattice decoding, especially to decoding of data transmitted through a MIMO channel or to multi-user detection.

When applied to ML decoding of STBC encoded MIMO transmissions with large number of antennas (for example with at least four transmitting antennas), this allows reducing the lattice decoding complexity. As a consequence, this enables implementing high throughput high reliability wireless MIMO transmissions with reasonable receiver complexity.

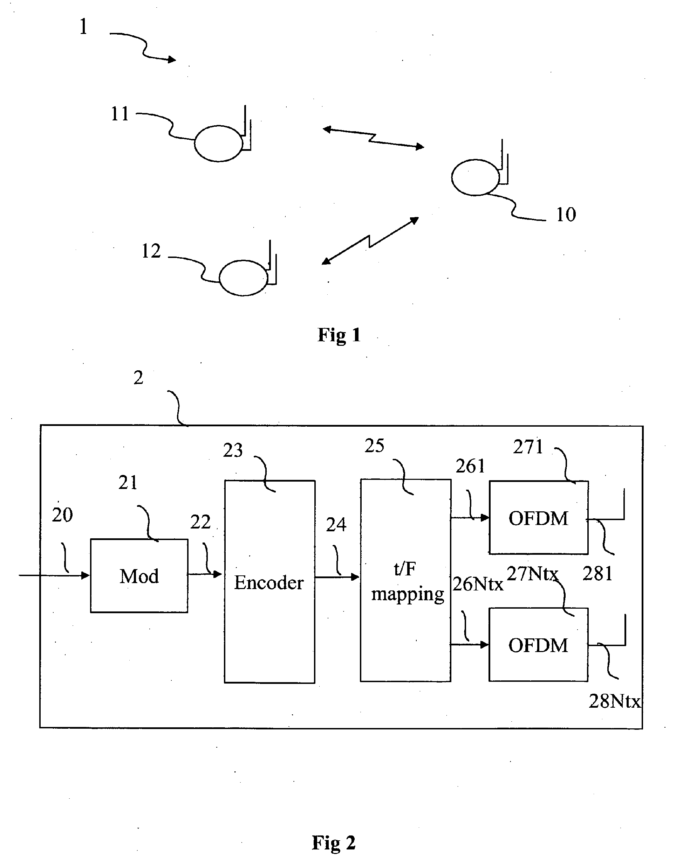

**Figure 1** represents a wireless network 1 comprising several stations 10 to 12. Each station 10 to 12 comprises a transmitter and a receiver using a MIMO (or Multiple Input Multiple Output) antenna system. Station 10 communicates with stations 11 and 12 through a wireless link.

**Figure 2** represents an exemplary architecture of a data transmitter 2 capable of sending data in a way compliant with the invention applied to decoding of a signal transmitted through a MIMO noisy channel. The data transmitter 2 can be implemented in stations 10 to 12.

The transmitter 2 comprises:

- a modulator 21;
- an encoder 23;
- a time/frequency mapper 25;
- *Ntx* OFDM modulators 271 to 27Ntx each modulating with an OFDM modulator an input signal 261 to 26Ntx; and
- Ntx antennas 281 to 28Ntx, each being associated to an OFDM modulator respectively 271 to 27Ntx.

The transmitter 2 receives a binary signal 22 which is digitally modulated by the modulator 21 with a first modulation which is, for instance a QAM modulation (or "Quadrature Amplitude Modulation") (e.g. 16 QAM or 64QAM). The modulator 21 generates groups of Q complex QAM symbols *S1* to SQ. Q is for example equal to 8.

Each group of Q symbols 22 is then encoded with the encoder 23 to form a STBC (or Space Time Block Code) codeword 24. The STBC is, for instance, a Golden code such as disclosed in document "The Golden Code: A 2 x 2 Full-Rate Space-Time Code with Non-Vanishing Determinants," which has been written by J.-C. Belfiore, G. Rekaya, E. Viterbo (and published in IEEE Transactions on Information Theory, vol. 51, n. 4, pp. 1432-1436, Apr. 2005.). According to a variant, the STBC is as disclosed in "Space-Time block codes from orthogonal designs" document written by V.Tarokh, H. Jafarkhani, and R. A. Calderbank (and published in IEEE Transactions on Information Theory, vol. 45, pp. 1456-1467, July 1999). The STBC is based on a complex matrix of dimension $N_{tx}*N$ where $N$ is the time dimension of the STBC.

The generated STBC 24 is mapped in the time/frequency mapper that transmits a dedicated signal 261 to 26Ntx to each of OFDM modulator 271 to 27Ntx. Then, each modulator 271 to 27Ntx modulates its input signal into an OFDM modulated signal that is sent on an antenna respectively 281 to 28Ntx (after possibly filtering, frequency transposition and amplification as usually done in a radio transmitted signal). As summary, the STBC codeword 24 is then sent on a MIMO channel.

Such a transmitter system is disclosed in "Space-frequency coded broadband OFDM systems", written by H. Bölcskei and A. J. Paulraj (and published in Proc. Wireless Commun. Networking Conf., Chicago, IL, Sept. 23-28, 2000, pp. 1-6).

There are many possible variants of the transmitter that are compliant with the invention. Among them, a single carrier modulation can replace the OFDM modulation (or any multi carrier modulation such IOTA (for "Isotropic Orthogonal Transform Algorithm")). Then, a time/frequency mapper 25 and the OFDM modulators 271 to 27Ntx are replaced by at least two single carrier modulators associated each with a antenna. Such a transmitter system is disclosed in "Space-Time block coding: A simple transmitter diversity technique for wireless communications" written by S. Alamouti (and published in IEEE Journal On Select Areas In Communications, vol. 16, pp. 1451-1458, October 1998).

According to other variants (that are compliant with previous ones), the first modulation can be of any digital modulation, e.g. nPSK (for "Phase Shift Keying with n phase values) or nQAM (eg with n equals to 16, 32, 64, 256...).

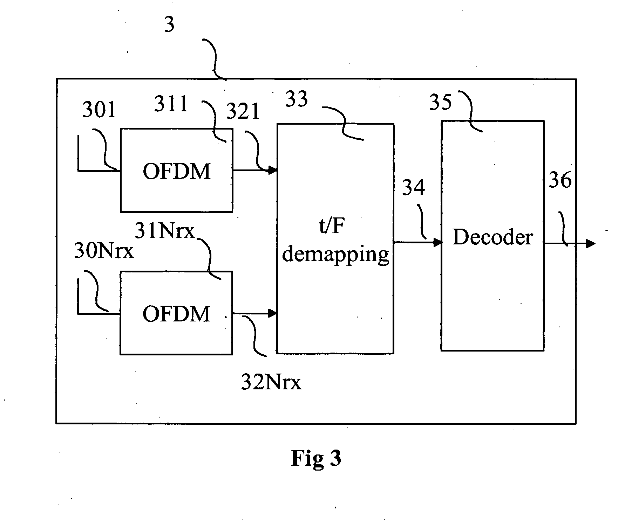

**Figure 3** represents an exemplary architecture of a data receiver 3 according to a specific embodiment of the invention. The receiver 3 receives a signal send by the transmitter 2 through a wireless channel. This channel is noisy and comprise Additive White Gaussian Noise (or AWGN) and possibly other noise such as interferences. The sent signal can also be affected by multipath echos and/or Doppler effect. The data receiver 3 can be implemented in stations 10 to 12.

The receiver 3 comprises:

- Nrx antennas 301 to 30Nrx;

- *Nrx* OFDM demodulators 311 to 31*Nrx* each demodulating a noisy OFDM modulated signal transmitted by an antenna respectively 301 to 30*Nrx;*
- a time/frequency demapper 33; and
- a decoder 35.

The receiver 3 matches the transmitter 2 (especially for modulation and code used by the transmitter). Then, according to variants using single carrier modulation inside the transmitter, the OFDM demodulators are replaced by the corresponding single carrier demodulators.

The receiver 3 comprises Nrx receive antennas 301 to 30*Nrx* so that the received signal 301 to 30*Nrx* can be represented by a *Nrx\*N* matrix, or equivalently a (*Nrx\*N)\*1* vector **R**. *N* is, for instance, equal to 2 and represents the time and/or frequency range occupied by the STBC.

The transmission between the encoder 23 and decoder 35 can be modeled by the following equation:

$$\mathbf{R} = \underbrace{\begin{pmatrix} \mathbf{H}_1 & 0 & \cdots & 0 \\ 0 & \mathbf{H}_2 & \ddots & \vdots \\ \vdots & \ddots & \ddots & 0 \\ 0 & \cdots & 0 & \mathbf{H}_N \end{pmatrix}}_{\mathbf{G}} \mathbf{CS} + \mathbf{v} = \mathbf{GS} + \mathbf{v} \qquad \text{(relation 1)}$$

Where the different parameters are as follows:

- **R** is the complex (*Nrx\*N)\*1* received vector;
- **H**$_i$ is the complex *Nrx\*Ntx* channel matrix at time/frequency interval *i* (frequency corresponds to a carrier of the multicarrier modulation; according to a variant using a single carrier modulation the interval *i* corresponds to a time interval);
- **H**=diag(**H**$_1$,..., **H**$_N$) is the complex block diagonal (*N\*Nrx)\*(N\*Ntx)* channel matrix at time/frequency intervals 1 to N;
- **C** is the complex (*Ntx\*N)\*Q* STBC coding matrix, where *Q* is the number of input complex symbols per STBC codeword;
- **S** is the complex *Q\*1* input vector of discrete modulated symbols;
- **v** is the complex (*N\*Nrx)\*1* Additive White Gaussian Noise (or AWGN) vector with autocorrelation matrix **R**$_v$ =$\sigma^2$**I***NNrx*, where **I***NNrx* is the identity matrix of size (*N\*Nrx)\*(N\*Nrx)* and $\sigma^2$ represents the variance of the AWGN.

According to a variant, the space/time coding process takes place with real inputs (instead of complex inputs). Then, the **C** matrix is a real matrix with a dimension (2*Ntx\*N)\*(2Q).*

When the additive noise and interferences corrupting the received signal is not white, a whitening filter is advantageously implemented before the decoder 35. $\sigma^2$ represents the variance of the resulting whitened noise.

The time/frequency demapper 33 receives demodulated signal from OFDM demodulators 311 to 31*Nrx* and is doing the reverse mapping (corresponding to dual operation of mapper 25). It provides a demapped signal to decoder 35.

The decoder 35 is a lattice decoder and is particularly well suited to perform ML decoding of the Space-Time Block encoded signal.

According to an example, the decoder 35 is exploiting the properties of the noise distribution by selecting points in a lattice that are between two spheres around a received point, the decoded point being chosen among selected points. This enables a reduction of the decoder complexity as the number of selected points can be lowered in comparison with a state of art decoder where the selected points are within one sphere around the received point. Actually, according to the invention, it is unlikely that ML decoding would choose points of the lattice that are too close to the received point as decoded points. Then, the decoder does not select these points as potential candidates for decoded points. Reduction of number of selected points enables a dramatic reduction of decoding complexity (the decoding complexity depend of the level of noise and is increasing with the number of selected points).

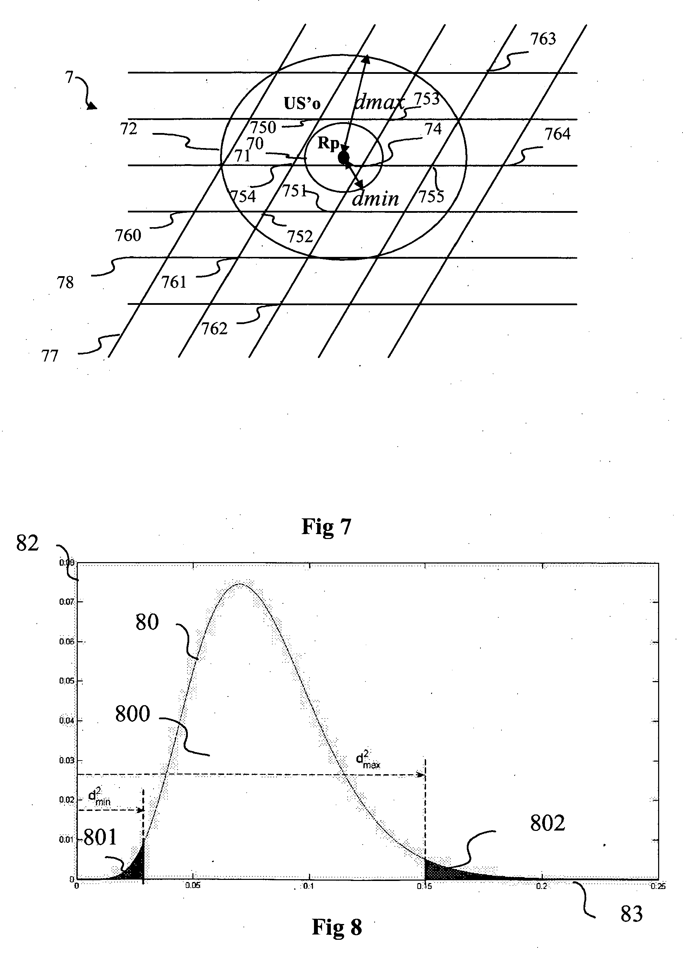

This aspect is illustrated on **figure 7**, which represents the distribution of received data received by the receiver 3. Figure 7 gives a simplified lattice representation 7 of the decoding problem. The problem is illustrated in the case where the dimension *K* is 2 (Q equals 1) for the sake of illustration clarity. Those two dimensions are represented respectively by lines 77 and lines 78. Intersections of lines 77 and 78 corresponds to points of the lattice 7.

The transmitted signal (which is the ML point here), is a lattice point 750 represented by **US'**$_0$**.** The received signal 70 is represented by **R**$_p$**=US'**$_0$+$\eta$ ($\eta$ being the noise vector) and is not a lattice point. The lattice points that can be considered as candidates for ML decoding are, according to the invention, in a search space between two spheres 71 and 72:

- the sphere 71 S($\mathbf{R_p}$,*dmin*) of radius *dmin* (which has a non null value) and centered on Rp;
- the sphere 72 S($\mathbf{R_p}$,*dmax*) of radius *dmax* (which is greater than *dmin*) and centered on $\mathbf{R_p}$.

Then, as illustrative example, a lattice point 74 is within the sphere 71 and is not among candidate points for the ML decoding according to the invention (whereas this point would have been selected by a state of the art decoding method). Lattice points 760 to 764 are outside the sphere 72 and are not among candidate points for the ML decoding. Lattice points 750 to 754 are in sphere 72 and outside sphere 71; then, these points are considered as candidates by the decoder.

**Figure 8** illustrates a distribution 80 of the norm of the noise vector η for $\sigma^2$ equal to 0.01 (20dB SNR) and K (or 2Q) equal to 16. This is a chi square distribution with $K$=16 degrees of freedom denoted $\chi^2_K$. The horizontal axis 83 represents the normalized distance to the received point. The vertical axis 82 corresponds to the distribution of samples for a given normalized distance.

The distances *dmin* and *dmax* are defined such that Pr($\|\eta\|$>*dmax*) equals $10^{-2}$ and Pr($\|\eta\|$ < *dmin*) equals $10^{-2}$. These probabilities are example values. It can be noted that area 801 corresponding to normalized distance lower than *dmin* and area 802 corresponding to normalized distance higher than *dmax* are very small (each having a normalized surface of $10^{-2}$) compared to the middle area 800, where the normalized distance is greater than *dmin* and lower than *dmax*. On the given example, *dmin* is around 0.025 that is significant. Then, it shows that it is very unlikely that the distance between a point corresponding to the coded point (without noise) and the actual received point is below *dmin.*

In the decoding process, *dmax* gives an initial value for the radius of the sphere S(Rp,r) within which the search will take place. By definition of *dmax*, the probability that the transmitted signal is outside this sphere is $10^{-2}$. Setting the initial radius to *dmax* therefore allows reducing the initial search space, and hence the decoding complexity, for a given level of performance.

According to an example, *dmin* is introduced and can advantageously be used in the decoding process according to two ways, as follows:

- A way to use it is to interrupt the decoding as soon as a lattice point is found within *dmin* from the received signal. It is then very likely that this point is the transmitted point (with a probability of 99%);
- Another way to use it is to define a second sphere S($\mathbf{R_p}$,*dmin*) inside S($\mathbf{R_p}$,*dmax*), inside which it is useless searching for lattice points.

Any of these utilizations (or a combination of both) will reduce the decoding complexity while knowing the impact on the performance.

More generally, *dmin* is advantageously defined by the following equation

$$\frac{2}{\sigma^2 2^Q (Q-1)!} \int_0^{d^2_{min}} \left(\frac{2x}{\sigma^2}\right)^{Q-1} \exp\left(\frac{-x}{\sigma^2}\right) \mathrm{d}x = p_0 \qquad (4)$$

where the integrated function is the probability density function (or pdf) of $\|\eta\|^2$ and $p_0$ is the desired probability threshold of the event (i.e. the transmitted signal is in S($\mathbf{R}$p,*dmin*)). Then, *dmin*/σ can be determined according to a predefined value of po. It can be computed on the fly *(dmin = σ.f(po)* where f(*po*) is fixed if *po* is predefined and can be computed off line during the design phase of the decoder) or determined according to a look-up table defining *dmin* according to σ. Advantageously, a single value of *po* is used. According to variants, several values of po are used in the decoder. Then, several values of f(*po*) are defined accordingly.

As variant, if a large number of po value are required for the decoding, *dmin* can be determined by using approximations of above equation (e.g. by using a first or second orders of a Taylor series).

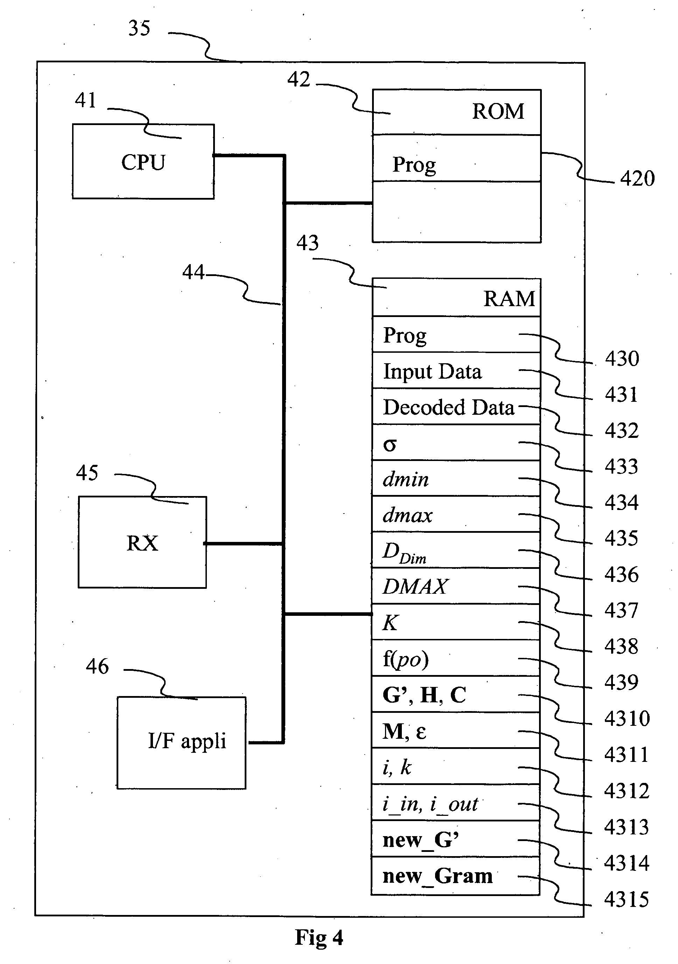

**Figure 4** represents an exemplary architecture of the decoder 35 of the receiver 3.

Decoder 35 comprises following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an interface 45 for reception of input signal coming from the demapper 33;

- an interface 46 for transmission of decoded data to an application.

Each of these elements of figure 2 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 42 comprises a program 420.

Algorithm of the method according to the invention are stored in the ROM 42. When switched on, the CPU 41 uploads the program 420 in the RAM and executes the corresponding instructions.

RAM 43 comprises:

- in a register 430, the program executed by the CPU 41 and uploaded after switch on of the decoder 35;
- input data in a register 431;
- decoded data in a register 432;
- a value of σ (standard deviation of noise) in a register 433;
- values of *dmin* and *dmax* in registers respectively 434 and 435;
- parameter D in a register 436;
- parameter *DMAX* in a register 437;
- parameter K in a register 438;
- f(*po*) enabling the computation of *dmin* according to σ in a register 439;
- matrices **G'** (equivalent channel matrix), **H** (channel matrix), C (code matrix) in a register 4310;
- Gram matrix **M** and small value matrix ε in a register 4311;
- variables *i* and k in a register 4312;
- *i_in* and *i_out* indices in a register 4313;
- new equivalent channel matrix **new_G'** in a register 4314; and
- new Gram matrix **new_Gram** in a register 4315.

According to an example, the decoder 35 is implemented in pure hardware configuration (e.g. in one or several FPGA, ASIC or VLSI with corresponding memory) or in a configuration using both VLSI and DSP.

**Figure 5** represents a decoding method implemented in the decoder 35.

The decoding begins with a initialization step 50, wherein different parameters of the method are set to their initial value(s).

Then, during a step 51, the decoder 35 waits for and receives a signal from demapper 33.

Then, the CPU 41 makes a channel estimation 52 based upon the received signal (associated to one transmitted block) or part of it. According to a variant of the invention, the estimation 52 is based upon several received signals (or part of them), each being associated to a transmitted block. According to another variant of the invention, the estimation 52 is not done at each reception of signal corresponding to one transmitted block; in this case, it may be done when necessary according to the channel changes (e.g. every 1 ms).

Then, in a step 53, CPU 41 computes σ using, for example, a pilot sequence and determines *dmin* as explained above and possibly *dmax* in a similar way. Advantageously, step 53 is executed after each channel estimation 52. According to a variant of the invention, step 53 is not done at each reception of signal corresponding to one transmitted block.

Then, CPU 41 is executing a preprocessing step 54.

Then, CPU 41 is enumerating lattice points and selects decoded point in a step 55.

Then, during a step 56, the components of the decoded point are inversely permutated according to the permutation produced by step 540. After step 56, step 51 is reiterated.

In a variant using DSP and VLSI, advantageously, step 54 is performed by the DSP and step 55 by a VLSI (e.g. ASIC or FPGA).

**Figure 6** details preprocessing step 54. A brief explanation of the decoding method is first disclosed hereafter.

We assume that the decoder 35 perfectly knows the channel matrix diag($\mathbf{H}_1$,..., $\mathbf{H}_N$), which is implemented in practice by using appropriate pilot symbols and appropriate tracking. The denomination STBC comes from the fact that each STB codeword is represented by a matrix CS and the encoding process is a simple matrix multiplication.

**CS** in equation (1) denotes the STB (Space Time Block) encoded signal. The encoding process is represented by complex matrix multiplications in the present case but from a more general point of view, it shall be represented by real matrices where the real and imaginary parts of S are encoded separately. Indeed, the STBC scheme disclosed in Alamouti document ("Space-Time block coding: A simple transmitter diversity technique for wireless communications") can only be represented with such real notations. Such more general writing turns (1) into:

7

$$\begin{pmatrix} \mathbf{R}^R \\ \mathbf{R}^I \end{pmatrix} = \underbrace{\begin{pmatrix} \mathbf{H}^R & -\mathbf{H}^I \\ \mathbf{H}^I & \mathbf{H}^R \end{pmatrix} \mathbf{C'}}_{\mathbf{G'}} \underbrace{\begin{pmatrix} \mathbf{S}^R \\ \mathbf{S}^I \end{pmatrix}}_{\mathbf{S'}} + \underbrace{\begin{pmatrix} \mathbf{v}^R \\ \mathbf{v}^I \end{pmatrix}}_{\mathbf{v'}} \qquad (2)$$

where **C'** is the STBC encoding matrix in real notations, $(.)^R$ and $(.)^I$ denote respectively the real and imaginary parts of a complex number or matrix.

In real notations, the dimension of the input signal S', which is the problem dimension, is K=2Q. When **S** is modulated using a QAM modulation, each of the components of **S'** are PAM modulated, i.e. they take bounded discrete values. Therefore **G'** is in this case a basis of the *K*=2Q dimensions lattice representing the problem. However, lattice decoding algorithms more advantageously use a triangular matrix as a lattice basis, so that the starting point of the search algorithm is not (2) but it is given by equation (3):

$$\mathbf{R}_p = \mathbf{U}^{-t}\mathbf{G''}\mathbf{R'} = \mathbf{US'} + \mathbf{\eta}$$

**U** is a upper triangular *K*x*K* matrix. $\mathbf{R}_p$ is the new *K*x1 observation vector and $\eta$ is the *K*x1 noise vector with

auto correlation $\mathbf{R}_\eta = \dfrac{\sigma^2}{2}\mathbf{I}_K$ . **U** is the new lattice basis that is used by lattice decoding algorithms.

According to a variant, the time/frequency dimension *N* is replaced by a time dimension if a single carrier modulation is used.

From the new observation $\mathbf{R}_p$ and knowledge of the channel, the STBC decoder finds the best estimate of the transmitted signal **S**. The lattice decoders use a lattice representation of the problem, where each lattice point is a potential transmitted signal. From this lattice representation, they enumerate a reduced number of candidate signals with respect to what would do a basic ML decoder. For instance, with Q equals to 8 and using 16QAM constellation, a basic ML decoder will enumerate $16^8$ candidates to decode a STBC codeword and the lattice decoders will only enumerate very few of them. According to ML decoding, The ML signal (or SML) corresponds to the minimum metric on all possible signals, i.e.

$$\mathbf{S}_{ML} = \underset{all\ possible\ \mathbf{S}}{\arg\min}\left(\|\mathbf{R} - \mathbf{GS}\|^2\right)$$

As all possible signals are too many, the search space is reduced to the space between two spheres 71 and 72 of radius *dmin* and *dmax*.

For any type of lattice decoder, the decoding algorithm can be split into two main phases:

- the preprocessing phase 54 that enables the determination of a base of point lattice on a subset of time intervals and/or subcarriers (frequencies).
- the search phase corresponding to step 55.

The preprocessing phase 54 begins with a computation 540 of Gram Matrix. Gram matrix corresponds to a multiplication of an equivalent channel matrix **new_G'** by its transpose **new_G'ᵗ**.

Then, during a step 541, the CPU 41 executes a triangular decomposition. A Cholesky decomposition of the associated Gram matrix is done by the CPU 41. This operation provides a triangular matrix **U** corresponding to the Gram matrix. More precisely, thanks to the structure of **new_G'**, a triangular matrix **U** is defined as follows (where **X**ᵗ denotes the transpose of a matrix **X**):

$$\mathbf{new\_G'^t}\ \mathbf{new\_G'} = \mathbf{U^t U}$$

Then, in a step 542, the received signal is projected on the matrix computed on step 541. This projection first multiplies the received signal **R'** by **new_G'ᵗ** and then by the inverse of **U**ᵗ.

As a variant, the step 541 is replaced by a QR decomposition of a new equivalent channel matrix (**new_G'**), **new_G'** being equal to **QU** where **Q** is an orthogonal matrix and **U** an upper triangular matrix. In this case, step 542 comprises a multiplication by $\mathbf{Q}^t$.

**Figure 12** represents details Gram Matrix computation 540. The step 540 begins with a step 5400 of computation of an equivalent channel matrix G' equal to the product **HC**.

Step 540 consists in permuting the columns of the real matrix G' of equation (2) according to a particular criterion based on the components of the Gram matrix $\mathbf{G'^tG'}$.

$$\underbrace{\begin{pmatrix} \mathbf{R}^R \\ \mathbf{R}^I \end{pmatrix}}_{\mathbf{R'}} = \underbrace{\begin{pmatrix} \mathbf{H}^R & -\mathbf{H}^I \\ \mathbf{H}^I & \mathbf{H}^R \end{pmatrix}}_{\mathbf{G'}} \mathbf{C'} \underbrace{\begin{pmatrix} \mathbf{S}^R \\ \mathbf{S}^I \end{pmatrix}}_{\mathbf{S'}} + \underbrace{\begin{pmatrix} \mathbf{v}^R \\ \mathbf{v}^I \end{pmatrix}}_{\mathbf{v'}} \qquad (2)$$

According to step 540, the lattice basis is permuted so that successive dimensions that are addressed in the search phase are as collinear as possible. The component $(\mathbf{G'^tG'})_{ij}$ contains the scalar product between $i^{th}$ and $j^{th}$ basis vectors that are respectively $i^{th}$ and $j^{th}$ column vectors of **G'**, so that the larger abs($(\mathbf{G'^tG'})_{ij}$), the more collinear the $i^{th}$ and $j^{th}$ vectors.

According to a variant, complex notations are used (instead of real notation), the vectorial space on the field of real numbers is replaced by the vectorial space on the field of complex numbers and the scalar product (and associated norm) is changed accordingly.

Then, during a step 5401, a matrix **M** is computed, **M** being equal to the product $\mathbf{G'^tG'}$ plus ε, where ε is smaller than the smallest absolute value of **M**. The use of ε allows that the step 540 also produces a permutation of $(1,..,K)$ even when **M** is diagonal. The product $\mathbf{G'^tG'}$ corresponds to computation of non normalized scalar products of vectors of G'.

Then, during a step 5402, the diagonal of **M** is set to 0 ($\mathbf{M}(i,i)$ equals 0 for every value of $i$ from 1 to $K$). This avoids producing the identity permutation or a permutation only based on the lattice basis vector norms, which performs worse than the present criterion.

During step 5402, the first element of a permutation vector **P** is set to 1 ($\mathbf{P}(1,1)= 1$) and a variable $i\_in$ is set to 1. This corresponds to a choice of first column of **G'**. As a variant, the first dimension dealt with is the one corresponding to the smallest or largest diagonal value of $\mathbf{G'^tG'}$ (this enables processing of the dimension with largest energy first, in the lattice decoding step).

After choice of a first dimension, the vectors of **M** are sorted according to a decreasing colinearity criterion, vectors being compared 2 by 2 (that enables a dimension permutation).

Then, during a step 5403, a counter i is set to 1.

Then, during a step 5404, the element $\mathbf{M}(i\_in, \mathbf{P}(1,1:i))$ is set to 0. $(1:i)$ denotes the vector $[1,2,...,i]$ so that **P**$(1,1:i)$ denotes the first $i$ components of the row 1 of **P**. $\mathbf{M}(i\_in,\mathbf{P}(1,1:i))$ denotes the elements of row $i\_in$ of **M** having column indexes $\mathbf{P}(1,1:i)$. This initialization 5404 of the $i\_in$ row of **M** is made to avoid producing twice the same index in the permutation vector (and hence not producing a permutation).

Then, during a step 5405, a counter k is set to 1 and a variable $max$ is set to 0.

Then, during a test 5406, the CPU 41 checks if the absolute value of $\mathbf{M}(i\_in,k)$ is superior or equal to $max$.

If so, during a step 5407, max is set to the absolute value of $\mathbf{M}(i\_in,k)$ and an index $i\_out$ is set to k.

If the result of test 5406 or after 5407, the counter k is incremented ($k=k+1$).

In test 5406 and step 5407, the index $i\_out$ corresponding to the basis vector is searched. The index $i\_out$ is the most collinear (i.e. largest absolute value of scalar product) with respect to the current basis vector $i\_in$.

Then, during a test 5409, the CPU 41 checks if the counter k is equal to $K+1$.

If no, the test 5406 is reiterated.

If yes, during a step 5410, the value of P(1,$i$+1) is set to $i\_out$. Adjacent dimensions in the permutation now have highest absolute value of scalar product. During, this step $i\_in$ is also set to $i\_out.$

Then, during step 5411, the counter $i$ is incremented ($i=i+1$).

Then, during a test 5412, the CPU 41 checks if $i$ equals $K.$

If no, step 5404 is reiterated.

If yes, during a step 5413, a new matrix **new_G'** is obtained from G' by permuting the columns of **G'** according to **P (new_G = G'**$(:,\mathbf{P}(1,1:K)))$. The new Gram matrix **new_Gram** is equal to the product **new_G'^t*new_G' new_Gram**=$\mathbf{G'^tG'}(\mathbf{P}(1,1:K),\mathbf{P}(1,1:K))$ and is obtained from $\mathbf{G'^tG'}$ by permuting the columns and lines of $\mathbf{G'^tG'}$. This new matrices **new_Gram** and **new_G'** are the ones that will serve for the lattice decoding preprocessing phase (QR or Cholesky decomposition...).

In a variant where step 541 is replaced by a QR decomposition of **new_G',** producing a **new_Gram** matrix is not necessary (during step 5413).

According to a variant, during step 5401 **M** is equal to the product $\mathbf{G'^tG}$ and, it is checked whether **M** is diagonal or not. If so, steps 5402 to 5412 are replaced by a permutation that is only based on the diagonal values of **M** and more especially that comprises an ordering of its elements according to decreasing (or increasing) values of diagonal values.

According to a variant, step 5401 can be replaced by step 13 disclosed in figure 13. According to this variant the scalar product between vectors of G' is normalized.

Step 14 begins by a step 130 of set of a counter $i$ to 0.

Then, during a step 131, the counter $i$ is incremented ($i=i+1$).

Then, during a step 132, a counter j is set to 0.

Then, during a step 133, the counter $j$ is incremented ($j=j+1$).

Then, during a step 134, the element M(i,j) is set to **G'$^t$G'(i,j)**/sqrt(**G'$^t$G'**(i,i)***G'$^t$G'**(j,j)), this scalar product being normalized.

Then, during a test 135, the CPU 41 checks if j equals K. If no, step 133 is reiterated.

If yes, during a test 136, the CPU 41 checks if $i$ equals $K$. If no, step 131 is reiterated. If yes, during a step 137, **M** is set to the sum **M** +ε.

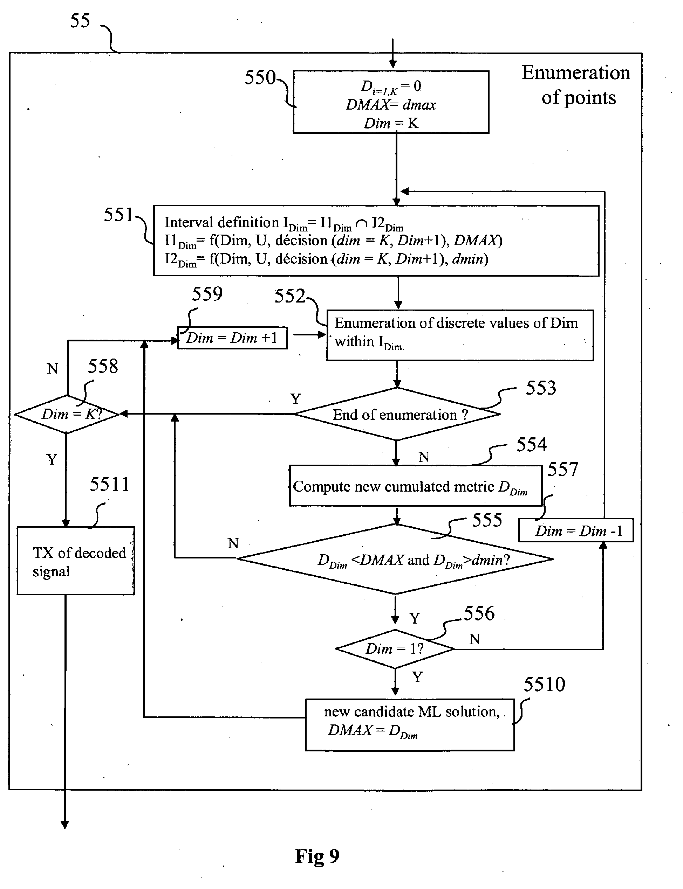

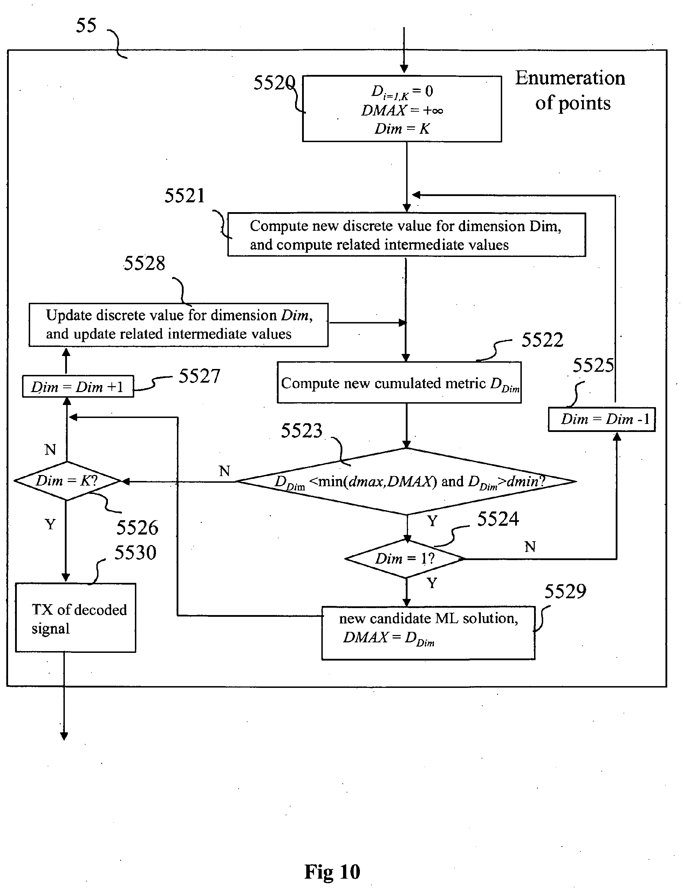

Figure 9 and 10 detail decoding step 55, which comprises an enumeration of candidate lattice points that takes into account a minimum distance *dmin.*

ML points are searched among lattice points (using the basis U) that are in a space between spheres 71 and 72 of radius respectively *dmin* and *dmax.*

Depending on the type of lattice decoder, this search phase is implemented in different ways. Figures 9 and 10 detail two different embodiments. Other alternative search algorithms can be implemented according to the invention, these algorithm being based on algorithms such as so called tree search, branch and bound and wherein the ML points are searched in a space outside a sphere of a minimum radius *dmin.*

Embodiment of figure 9 is based upon a sphere decoding (as the algorithm of Viterbo/Boutros) with a restriction of the selection lattice points that must not be too close to the received signal point (the distance between the selected points and the received signal point is greater than *dmin*). Provided that the sphere radius is large enough, the ML point is in the largest sphere. This approach allows to define bounds for each component (or dimension) of the candidate signals S, within which discrete components of the signal are enumerated. That can be summarized by the equation:

$$d\min{}^2 < \left(\mathbf{U}^{-1}\mathbf{R}_p - \mathbf{S}\right)^t \mathbf{U}^t\mathbf{U}\left(\mathbf{U}^{-1}\mathbf{R}_p - \mathbf{S}\right) < d\max{}^2$$

The inverse of U is straightforward. Using that U is upper triangular, we obtain recursive bounds for each component of a candidate S.

The components of S further satisfy the modulation constellation boundaries constraints as S components are a constellation point. For instance, if a 16QAM modulation is used, the components of S satisfy -3<Si<3.

The step 55 begins with an initialization step 550 where a cumulated metric *DDim* associated to each dimension is set to 0, a maximum distance *DMAX* is set to infinity and a current dimension index *Dim* is set to K (lattice dimension).

Then, during a step 551, three intervals are defined:

- *I1dim*=[*V1,V2*] defines boundaries for the components of dimension *Dim* of a candidate signal as follows:

$$V1 = \frac{1}{\mathbf{U}_{i,i}}\left(-\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

$$V2 = \frac{1}{\mathbf{U}_{i,i}}\left(\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

for $i = K$ -1 and with $r = DMAX$, $\mathbf{O} = \mathbf{U}^{-1}\mathbf{R}_p$ and $i = Dim$

- *I2dim* =]-∞, *V'1*] U [*V'2*, +∞[ defines boundaries for the components of dimension *Dim* of a candidate signal as follows:

$$V'1 = \frac{1}{\mathbf{U}_{i,i}}\left(-\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

$$V'2 = \frac{1}{\mathbf{U}_{i,i}}\left(\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

for $i$ = K -1 and with r = $dmin$, $\mathbf{O} = \mathbf{U}^{-1}\mathbf{R}_p$ and $i = Dim$

- $IDim$ is equal to the intersection of $I1dim$ and $I2dim$ and is also restricted to the boundaries of the modulation constellation.

Then, during a step 552, the CPU 41 begins to enumerate or continues to enumerate the discrete values of a component of dimension $Dim$ of a candidate.

Then, during a test 553, the CPU 41 checks if the enumeration is finished (i.e. if all possible discrete values of $Idim$ have been tested).

If the negative, during a step 554, the CPU 41 computes a new cumulated metric $DDim$ associated to $Dim$ and current related discrete value.

Then, during a test 555, the CPU 41 checks if the cumulated metric $DDim$ is smaller than $DMAX$ and larger than $dmin$.

If so, during a test 556, the CPU 41 checks if the current dimension $Dim$ is equal to 1.

If no, the dimension $Dmin$ is decreased by 1 in a step 557 and the step 551 is reiterated.

If during the test 553, the end of enumeration is reached, or if the result of test 555 is negative, then, during a test 558, the CPU 41 checks if $Dim$ equals K.

If $Dim$ is different of K, then during a step 559, $Dim$ is increased by 1 and step 552 is reiterated.

If $Dim$ equals K, then, during a step 5511, the current ML candidate is chosen and sent as decoded signal and demapped according to digital modulation (symbol to bits conversion) to an application.

If the result of test 556 is positive ($Dim$=1), then during a step 5510, a new candidate ML solution replaces the current one and $DMAX$ is set to $DDim$. After step 5510, step 559 is performed.

Embodiment of **figure 10** is based upon a decoding based on projections (as the Schnorr-Euchner algorithm) with a restriction of the selection lattice points that must not be too close to the received signal point (the distance between the selected points and the received signal point is greater than $dmin$). The search comprises successive orthogonal projections of the received signal on lattice subspaces and enumerating the lattice points between two spheres 71 and 72 around the projected point.

The components of **S** further satisfy the modulation constellation boundaries constraints as **S** components are a constellation point. For instance, if a 16QAM modulation is used, the components of **S** satisfy -3<Si<3.

According to variant of figure 10, the step 55 begins with an initialization step 5520 where a cumulated metric $DDim$ associated to each dimension is set to 0, a maximum distance $DMAX$ is set to infinity and a current dimension index $Dim$ is set to K (lattice dimension).

Then, during a step 5521, the CPU 41 computes a new discrete value of component of dimension $Dim$ of a candidate signal and intermediate values related to $Dim$ and to this discrete value (incrementing step, partial metric).

Then, during a step 5522, the CPU 41 computes a new cumulated metric $DDim$ associated to $Dim$ and current related discrete value.

Then, during a test 5523, the CPU 41 checks if the cumulated metric $DDim$ is smaller than the minimum value among $dmax$ and $DMAX$ ($DDim<min(dmax,DMAX)$) and larger than $dmin$ ($DDim>$dmin).

If so, during a test 5524, the CPU 41 checks if the current dimension $Dim$ is equal to 1.

If no, the dimension $Dim$ is decreased by 1 in a step 5525 and the step 5521 is reiterated.

If yes, during a step 5529, a new candidate ML solution replaces the current one and $DMAX$ is set to $DDim$.

If the result of test 5523 is negative, or then, during a test 5526, the CPU 41 checks if $Dim$ equals K.

If $Dim$ is different of K or after step 5529, during a step 5527, $Dim$ is increased by 1.

Then, during a step 5528, the CPU 41 updates a new discrete value of component of dimension $Dim$ of a candidate signal (i.e. add the incrementing step to the previous discrete value of $Dim$) and intermediate values related to $Dim$ and to this discrete value. Then, step 5522 is reiterated.

If $Dim$ equals K during the test 5526, then, during a step 5530, the current ML candidate is chosen and sent as decoded signal and demapped according to digital modulation (symbol to bits conversion) to an application.

As a variant step 55 does not take into account a minimum distance *dmin.* Such a variant can derive from decoding step presented in figures 9 and 10 and is, for example, based on the enumeration of candidates as in document "A universal lattice code decoder for fading channel," written by E. Viterbo and J. Boutros (and published in IEEE Trans. Inform. Theory, vol. 45, pp. 1639-1642, July 1999) or in document "Lattice basis reduction: Improved practical algorithms and solving subset sum problems," written by C.P. Schnorr and M. Euchner (and published in Math. ProGraming, vol. 66, pp. 181-191, 1994). Those documents disclose ML recursive decoding algorithms that are based on a lattice and enable enumeration of points and selection of points after reception of a signal representative of data. The selection of points is done in a sphere the diameter of which depends on the signal/noise ratio. After computation of some metrics, a ML point is selected either by enumerating candidates points in a sphere (Boutros) or by successive projections on sublattices (Schnorr/Euchner).

**Figure 11** represents a multiuser detection according to a specific embodiment of the invention. This detection or decoding is applied to a wireless network comprising a receiver and a set of several transmitters that can be identified through a multiple access scheme (e.g. CDMA (or Code Division Multiple Access), flash OFDM, ...). In this context, several users are sharing the same propagation resource to transmit data to the receiver.

In the case of multiuser detection, similarly to the MIMO decoding as disclosed previously, the decoding problem comprises a detection of a transmitted multidimensional discrete input vector based on a multidimensional continuous observation that is made of a linearly distorted version of the transmitted vector further corrupted by additive noise. For multiuser detection according to the invention, the multidimensional input vector is made of the real and imaginary components of the collection of symbols transmitted by Q users on a given time and/or frequency region depending on the multiple access scheme. For instance, in the case of Code Division Multiple Access (CDMA), the region corresponds to the time duration of the spreading sequences. The multidimensional continuous observation is made of the collection of matched responses to the set of used multiple access signatures. The linear distortion of the transmitted signals is the matrix made of the collection of equivalent channel matrices between the Q transmitters and the receiver taking into account the multiple access scheme. For instance, in the case of CDMA, this linear distortion is made of the combination of the channel matrices with the correlation matrix of the spreading codes subset. The additive noise is the thermal additive white Gaussian noise at the receiver side and its amplitude follows a chi square law.

Figure 11 represents a multi-user detection according to a specific embodiment of the invention. This detection is implemented in a receiver that receives data from Q transmitters using e.g. a CDMA.

The decoding begins with a initialization step 110, wherein different parameters of the method are set to their initial value(s).

Then, during a step 111, the receiver waits for and receives a signal from filters matched to the used CDMA sequences.

Then, the receiver makes an estimation 112 of the channels between the Q transmitters and the receiver. This estimation is based upon the pilot sequences used specifically by each transmitter.

Then, in a step 113, the receiver computes σ using, for example, pilot sequences, and determines *dmin* as explained above (Q meaning here the number of transmitters being used to define *dmin* in the same way as Q meaning the number of symbol per space/time codeword in the embodiment of figure 5) and possibly *dmax* in a similar way. Advantageously, step 113 is executed after each channel estimation 112. According to a variant of the invention, step 113 is not done at each reception of signal corresponding to one transmitted block.

According to a variant, the decoding method does not take into account any minimum distance *dmin* and step 113 does not determine *dmin.*

Then, the receiver is executing a preprocessing step 114 similar to step 54 of figure 5, the equivalent channel matrix G' being replaced by the matrix made of the collection of equivalent channel matrices between the Q transmitters and the receiver taking into account the multiple access scheme.

Then, receiver is enumerating lattice points and selects decoded point in a step 115 similarly to step 55 of figure 5, the candidate transmitted space/time encoded signal being replaced by the collection of the transmitted signals by the Q transmitters.

Then, during a step 116, the components of the decoded point are inversely permutated according to the permutation produced by step 540. After step 116, step 111 is reiterated.

According to variant of multi-user detection, part of the transmitters or all of them and the receiver use single antennas, or MIMO. According to other variants, the transmitters and the receiver are using single carrier or multiple carrier modulation.

Of course, the invention is not limited to the embodiments described above.

The invention is compatible with any type of wireless link (point to point links, wireless LANs, mobile networks, digital broadcasting, satellite communication, ...). The disclosed receiver in figure 3 comprises then elements adapted to a specific application (such as front end, demodulator, MAC layer interface, and all other usual communication layer elements). The invention is especially well adapted to the reception of Digital Video Broadcasting (or DVB (e.g. DVB-T (terrestrial), DVB-S (satellite), DVB-H (handheld)..). In this case, the discrete multidimensional coded signal comprises data representative of a digital video broadcast signal.

The invention is advantageously used in high spectral efficiency wireless transmission (MIMO system and/or nQAM modulation), and, in particular, high rate transmission. Indeed, the invention can be used for other transmission (eg. single antenna for multi-user detection, nQPSK modulation, ...).

The invention is not limited to MIMO decoding or multi-user detection and can be applied to combination of MIMO decoding and multi-user detection and more generally to any system wherein noise amplitude distribution is following a chi square law and more generally laws that are not centred on 0 (these laws are generally associated to a multidimensional distribution of noise in a multidimensional signal decoding).

The example comprises the determination of a minimum distance according to a noise level associated to the multidimensional received signal. When applied to a MIMO decoding, the dimensions of the received signals corresponds to K (in real notation for nQAM or nPSK modulation) or Q(in complex notation for nQAM or nPSK modulation or polar notation for nPSK modulation). When applied to a multi-user detection, the dimensions of the received signal corresponds to the number of users (Q in complex notation or polar notation (if the users using nPSK modulation)) or K=2Q in real notation.

According to MIMO decoding according to the invention, the receiver decodes a signal that has been space time encoded and transmitted with at least two antennas. The space time encoding can be based on a space time block code. According to a variant, the space time encoding is a simple spatial multiplexing; then, the code matrix C is the identity matrix.

## Claims

1. Method of decoding of a multidimensional received signal corresponding to a discrete multidimensional coded signal transmitted through a channel, so-called transmitted signal, **characterized in that** it comprises the following steps:

   - computation (5400, 5401, 13, 134) of a first matrix **(G'$^t$G', G')** with respect to an estimation of the channel **(H)** and a code **(C)** associated to the transmitted signal;
   - sorting (5413) of vectors of the first matrix according to a decreasing colinearity criterion, by applying, a permutation to vectors of the first matrix to obtain a reordered matrix;
   - decoding (55, 115) of an observation with a lattice decoding by using a matrix derived from the reordered matrix to get estimation of a permutated transmitted signal; and
   - inverse permutation (56, 116) of the estimation of the permutated transmitted signal to get an estimation of the transmitted signal.

2. Method according to claim 1, **characterized in that** the first matrix is an equivalent channel matrix **(G')** equal to a product of a channel matrix (H) by a code matrix **(C).**

3. Method according to claim 2, **characterized in that**, the matrix derived from the reordered matrix is the reordered matrix and **in that** it comprises a QR preprocessing step, the decoding step comprising a decomposition of the reordered matrix.

4. Method according to claim 1, **characterized in that** the first matrix is a Gram matrix **(G'$^t$G')** that is equal to the product of the transpose of an equivalent channel matrix **(G'$^t$)** by the equivalent channel matrix **(G'),** the equivalent channel matrix being equal to a product of a channel matrix by a code matrix, the reordered matrix being obtained by permutation of columns and rows of the first matrix according to a decreasing colinearity criterion.

5. Method according to claim 4, **characterized in that** it comprises a Cholesky preprocessing step (541), the decoding step comprising a Cholesky decomposition of the reordered matrix.

6. Method according to any of claims 1 to 5, **characterized in that** the sorting of vectors of the first matrix according to a decreasing colinearity criterion comprises at least a scalar product computation between two vectors of the first matrix.

7. Method according to claim 6, **characterized in that** the at least a scalar product (134) is normalized.

8. Method according to claim 6, **characterized in that** the at least a scalar product (5401) is not normalized.

9. Method according to any claims 1 to 8, **characterized in that** the discrete multidimensional coded signal comprises data representative of a digital video broadcast signal.

10. Receiver (3) comprising a decoder (35) of a multidimensional received signal corresponding to a discrete multidimensional coded signal transmitted through a channel, so-called transmitted signal, **characterized in that** the decoder comprises the following means:

- means of computation of a first matrix with respect to an estimation of the channel and a code associated to the transmitted signal;
- means of sorting of vectors of the first matrix according to a decreasing colinearity criterion, by applying a permutation to vectors of the first matrix to obtain a reordered matrix;
- means of decoding of an observation with a lattice decoding by using a matrix derived from the reordered matrix to get estimation of a permutated transmitted signal; and
- means of inverse permutation of the estimation of the permutated transmitted signal to get an estimation of the transmitted signal.

**Patentansprüche**

1. Verfahren zum Decodieren eines mehrdimensionalen Empfangssignals, das einem über einen Kanal übertragenen diskreten mehrdimensionalen codierten Signal, einem sogenannten Sendesignal, entspricht, **dadurch gekennzeichnet, dass** das Verfahren die folgenden Schritte umfasst;

- Berechnung (5400, 5401, 13, 134) einer ersten Matrix ($\mathbf{G}^{\text{t}}\mathbf{G}$', $\mathbf{G'}$) in Bezug auf einen Schätzwert des Kanals ($\mathbf{H}$) und einen dem Sendesignal zugeordneten Code ($\mathbf{C}$);
- Sortieren (5413) der Vektoren der ersten Matrix in Übereinstimmung mit einem Kriterium abnehmender Kollinearität durch Anwenden einer Permutation auf Vektoren der ersten Matrix, um eine umgeordnete Matrix zu erhalten;
- Decodieren (55, 115) einer Beobachtung mit einer Gitterdecodierung unter Verwendung einer von der umgeordneten Matrix abgeleiteten Matrix, um einen Schätzwert eines permutierten Sendesignals zu erhalten; und
- inverse Permutation (56, 116) des Schätzwerts des permutierten Sendesignals, um einen Schätzwert des Sendesignals zu erhalten.

2. Verfahren nach Anspruch 1, **dadurch gekennzeichnet, dass** die erste Matrix eine äquivalente Kanalmatrix ($\mathbf{G'}$) ist, die gleich einem Produkt einer Kanalmatrix ($\mathbf{H}$) mit einer Codematrix ($\mathbf{C}$) ist.

3. Verfahren nach Anspruch 2, **dadurch gekennzeichnet, dass** die von der umgeordneten Matrix abgeleitete Matrix die umgeordnete Matrix ist und dass sie einen QR-Vorverarbeitungsschritt umfasst, wobei der Decodierungsschritt eine Zerlegung der umgeordneten Matrix umfasst.

4. Verfahren nach Anspruch 1, **dadurch gekennzeichnet, dass** die erste Matrix eine Gram-Matrix ($\mathbf{G}^{\text{t}}\mathbf{G}$') ist, die gleich dem Produkt der Transponierten einer äquivalenten Kanalmatrix ($\mathbf{G}^{\text{t}}$) mit der äquivalenten Kanalmatrix($\mathbf{G'}$) ist, wobei die äquivalente Kanalmatrix gleich einem Produkt einer Kanalmatrix mit einer Codematrix ist, wobei die umgeordnete Matrix durch Permutation der Spalten und Zeilen der ersten Matrix in Übereinstimmung mit einem Kriterium abnehmender Kollinearität erhalten wird.

5. Verfahren nach Anspruch 4, **dadurch gekennzeichnet, dass** es einen Cholesky-Vorverarbeitungsschritt (541) umfasst, wobei der Decodierungsschritt eine Cholesky-Zerlegung der umgeordneten Matrix umfasst.

6. Verfahren nach einem der Ansprüche 1 bis 5, **dadurch gekennzeichnet, dass** das Sortieren von Vektoren der ersten Matrix in Übereinstimmung mit einem Kriterium abnehmender Kollinearität mindestens eine Skalarproduktberechnung zwischen zwei Vektoren der ersten Matrix umfasst.

7. Verfahren nach Anspruch 6, **dadurch gekennzeichnet, dass** das mindestens eine Skalarprodukt (134) normiert wird.

8. Verfahren nach Anspruch 6, **dadurch gekennzeichnet, dass** das mindestens eine Skalarprodukt (5401) nicht normiert wird.

9. Verfahren nach einem der Ansprüche 1 bis 8, **dadurch gekennzeichnet, dass** das diskrete mehrdimensionale codierte Signal Daten umfasst, die ein Digitalfernsehsignal repräsentieren.

10. Empfänger (3), der einen Decoder (35) eines mehrdimensionalen Empfangssignals umfasst, das einem über einen Kanal übertragenen diskreten mehrdimensionalen codierten Signal, einem sogenannten Sendesignal, entspricht, **dadurch gekennzeichnet, dass** der Decoder die folgenden Mittel umfasst;

- Mittel zur Berechnung einer ersten Matrix in Bezug auf einen Schätzwert des Kanals und einen dem Sendesignal zugeordneten Code;
- Mittel zum Sortieren der Vektoren der ersten Matrix in Übereinstimmung mit einem Kriterium abnehmender Kollinearität durch Anwenden einer Permutation auf Vektoren der ersten Matrix, um eine umgeordnete Matrix zu erhalten;
- Mittel zum Decodieren einer Beobachtung mit einer Gitterdecodierung unter Verwendung einer von der umgeordneten Matrix abgeleiteten Matrix, um einen Schätzwert eines permutierten Sendesignals zu erhalten; und
- Mittel zur inversen Permutation des Schätzwerts des permutierten Sendesignals, um einen Schätzwert des Sendesignals zu erhalten.

**Revendications**

1. Procédé de décodage d'un signal multidimensionnel reçu correspondant à un signal multidimensionnel discret codé transmis via un canal, appelé signal transmis, **caractérisé en ce qu'**il comprend les étapes suivantes :

- calcul (5400, 5401, 13, 134) d'une première matrice ($\mathbf{G'^tG'}$, $\mathbf{G'}$) par rapport à une estimation du canal (H) et à un code **(C)** associé au signal transmis ;
- tri (5413) de vecteurs de la première matrice selon un critère de colinéarité décroissant, en appliquant une permutation à des vecteurs de la première matrice pour obtenir une matrice reclassée ;
- décodage (55, 115) d'une observation avec un décodage en treillis à l'aide d'une matrice dérivée de la matrice reclassée pour obtenir une estimation d'un signal permuté transmis ; et
- permutation inverse (56, 116) de l'estimation du signal permuté transmis pour obtenir une estimation du signal transmis.

2. Procédé selon la revendication 1, **caractérisé en ce que** la première matrice est une matrice de canal équivalente **(G')** égale à un produit d'une matrice de canal **(H)** par une matrice de code **(C).**

3. Procédé selon la revendication 2, **caractérisé en ce que** la matrice dérivée de la matrice reclassée est la matrice reclassée et **en ce qu'**il comprend une étape de prétraitement QR, l'étape de décodage comprenant une décomposition de la matrice reclassée.

4. Procédé selon la revendication 1, **caractérisé en ce que** la première matrice est une matrice Gram ($\mathbf{G'^tG'}$) égale au produit de la transposée d'une matrice de canal équivalente ($\mathbf{G'^t}$) par la matrice de canal équivalente (G'), la matrice de canal équivalente étant égale à un produit d'une matrice de canal par une matrice de code, la matrice reclassée étant obtenue par une permutation de colonnes et de lignes de la première matrice selon un critère de colinéarité décroissant.

5. Procédé selon la revendication 4, **caractérisé en ce qu'**il comprend une étape de pré-traitement de Cholesky (541), l'étape de décodage comprenant une décomposition de Cholesky de la matrice reclassée.

6. Procédé selon une quelconque des revendications 1 à 5, **caractérisé en ce que** le tri de vecteurs de la première matrice selon un critère de colinéarité décroissant comprend un calcul d'au moins un produit scalaire entre deux vecteurs de la première matrice.

7. Procédé selon la revendication 6, **caractérisé en ce que** l'au moins un produit scalaire (134) est normalisé.

8. Procédé selon la revendication 6, **caractérisé en ce que** l'au moins un produit scalaire (5401) n'est pas normalisé.

9. Procédé selon une quelconque des revendications 1 à 8, **caractérisé en ce que** le signal multidimensionnel discret codé comprend des données représentant un signal de diffusion vidéo numérique.

**10.** Récepteur (3) comprenant un décodeur (35) d'un signal multidimensionnel reçu correspondant à un signal multidimensionnel discret codé transmis via un canal, appelé signal transmis, **caractérisé en ce que** le décodeur comprend les moyens suivants :

- moyen de calcul d'une première matrice par rapport à une estimation du canal et à un code associé au signal transmis ;
- moyen de tri de vecteurs de la première matrice selon un critère de colinéarité décroissant, en appliquant une permutation à des vecteurs de la première matrice pour obtenir une matrice reclassée ;
- moyen de décodage d'une observation avec un décodage en treillis à l'aide d'une matrice dérivée de la matrice reclassée pour obtenir une estimation d'un signal permuté transmis ; et
- moyen de permutation inverse de l'estimation du signal permuté transmis pour obtenir une estimation du signal transmis.

1

11

10

12

**Fig 1**

2

20   21   23   25   261   271

Mod   22   Encoder   24   t/F mapping

OFDM

26Ntx   27Ntx   281

OFDM

28Ntx

**Fig 2**

**Fig 3**

35

41

CPU

42

ROM

Prog

420

43

44

45

RX

46

I/F appli

RAM

Prog — 430

Input Data — 431

Decoded Data — 432

$\sigma$ — 433

*dmin* — 434

*dmax* — 435

$D_{Dim}$ — 436

*DMAX* — 437

*K* — 438

f(*po*) — 439

**G', H, C** — 4310

**M**, $\varepsilon$ — 4311

*i, k* — 4312

*i_in, i_out* — 4313

**new_G'** — 4314

**new_Gram** — 4315

**Fig 4**

50

Init

51

Signal RX

52

Channel estimation

53

$\sigma, d_{min}, d_{max}$

54

Preprocessing

55

Enumeration
of points

Selection
of decoded point

56

Inverse permutation
of detected point

**Fig 5**

**Fig 6**

**Fig 7**

**Fig 8**

55

Enumeration
of points

550

$D_{i=1,K} = 0$
$DMAX = dmax$
$Dim = K$

551

Interval definition $I_{Dim} = I1_{Dim} \cap I2_{Dim}$
$I1_{Dim} = f(Dim, U, \text{décision } (dim = K, Dim+1), DMAX)$
$I2_{Dim} = f(Dim, U, \text{décision } (dim = K, Dim+1), dmin)$

559

552

$Dim = Dim + 1$

Enumeration of discrete values of Dim within $I_{Dim}$.

N

558

$Dim = K$?

Y

553

End of enumeration ?

N

554

557

Compute new cumulated metric $D_{Dim}$

Y

5511

TX of decoded signal

N

555

$Dim = Dim - 1$

$D_{Dim} < DMAX$ and $D_{Dim} > dmin$?

Y

556

$Dim = 1$?

N

Y

5510

new candidate ML solution,
$DMAX = D_{Dim}$

**Fig 9**

**Fig 10**

110 — Init

111 — Signal RX

112 — Channels estimation

113 — $\sigma,\ d_{min},\ d_{max}$

114 — Preprocessing

115 — Enumeration
of points

Selection
of detected point

116 — Inverse permutation
of detected point

**Fig 11**

540

Gram Matrix computation

$$\mathbf{G'} = \mathbf{HC}$$ — 5400

$$\mathbf{M} = \mathbf{G'}^t\mathbf{G'} + \varepsilon$$ — 5401

Init $\mathbf{M}(i,i) = 0$; $\mathbf{P}(1,1)=1$; $i\_in=1$ — 5402

$i = 1$ — 5403

$\mathbf{M}(i\_in, \mathbf{P}(1,1:i))=0;$ — 5404

$k = 1$; $max = 0$ — 5405

N ← abs($\mathbf{M}(i\_in,k)\geq max$? — 5406

Y

$max=$abs($\mathbf{M}(i\_in,k)$) ; $i\_out=k$ — 5407

$k = k+1$ — 5408

N ← $k = K+1$? — 5409

Y

$\mathbf{P}(1,i+1)=i\_out$; $i\_in=i\_out$ — 5410

$i = i+1$ — 5411

N ← $i = K$? — 5412

Y

new_$\mathbf{G'} = \mathbf{G'}(:,\mathbf{P}(1,1:K))$;
new_Gram=$\mathbf{G'}^t\mathbf{G'}(\mathbf{P}(1,1:K),\mathbf{P}(1,1:K))$; — 5413

**Fig 12**

13

$i = 0$ — 130

$i = i+1$ — 131

$j = 0$ — 132

$j = j+1$ — 133

$\mathbf{M}(i,j)=\mathbf{G'^tG'}(i,j)/\text{sqrt}(\mathbf{G'^tG'}(i,i)*\mathbf{G'^tG'}(j,j))$ — 134

N — $j = K?$ — 135

Y

N — $i = K?$ — 136

Y

$\mathbf{M}=\mathbf{M}+\varepsilon$ — 137

**Fig 13**

**EP 1 912 367 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2863422 A

### Non-patent literature cited in the description

- VLSI implementation of MIMO detection using the sphere decoding algorithm. *IEEE Journal,* July 2005, vol. 40, 1566-1577
- On maximum-likelihood detection and the search for the closest lattice point. *IEEE Transactions,* vol. 49, 238-2402
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436
- **V.TAROKH ; H. JAFARKHANI ; R. A. CALDER-BANK.** Space-Time block codes from orthogonal designs. *IEEE Transactions on Information Theory,* July 1999, vol. 45, 1456-1467
- **H. BÖLCSKEI ; A. J. PAULRAJ.** Space-frequency coded broadband OFDM systems. *Proc. Wireless Commun. Networking Conf,* 23 September 2000, 1-6
- **S. ALAMOUTI.** Space-Time block coding: A simple transmitter diversity technique for wireless communications. *IEEE Journal On Select Areas In Communications,* October 1998, vol. 16, 1451-1458
- **E. VITERBO ; J. BOUTROS.** A universal lattice code decoder for fading channel. *IEEE Trans. Inform. Theory,* July 1999, vol. 45, 1639-1642
- **C.P. SCHNORR ; M. EUCHNER.** Lattice basis reduction: Improved practical algorithms and solving subset sum problems. *Math. ProGraming,* 1994, vol. 66, 181-191